(19) Europäisches Patentamt
European Patent Office
Office européen des brevets

(11) **EP 4 170 334 A1**

(12) # EUROPEAN PATENT APPLICATION

(43) Date of publication:
**26.04.2023 Bulletin 2023/17**

(21) Application number: **21203942.4**

(22) Date of filing: **21.10.2021**

(51) International Patent Classification (IPC):
*G01N 27/30* (2006.01)  *G01N 27/416* (2006.01)

(52) Cooperative Patent Classification (CPC):
**G01N 27/302; G01N 27/301; G01N 27/4035; G01N 27/4167**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Vilnius University**
**01513 Vilnius (LT)**

(72) Inventors:
• **Ramonas, Eimantas**
**10257 Vilnius (LT)**

• **Butkevicius, Marius**
**10257 Vilnius (LT)**
• **Dagys, Marius**
**10257 Vilnius (LT)**
• **Ratautas, Dalius**
**10257 Vilnius (LT)**

(74) Representative: **Petniunaite, Jurga**
**AAA Law**
**P.O. Box 33**
**A. Gostauto street 40B**
**03163 Vilnius (LT)**

(54) **ENZYMATIC SELF-CALIBRATING BIOSENSOR FOR CONTINUOUS PH MONITORING**

(57)     This invention demonstrates an enzymatic and easily scalable pH sensor. The invented sensor consists of a) an enzymatic reference electrode (1) containing oxygen reducing enzyme, fitted into a microtip-shaped tube and filled with electrolyte solution of known pH which is separated from measured media with polymeric membrane and (b) enzymatic working electrode (2) containing oxygen reducing enzyme, on the outer side of microtip shaped tube and in a direct contact with the measured media. The pH measurement is carried out by measuring potential difference between two electrodes using a voltmeter. The potential difference correlates to the pH of the measurement media and can be applied for continuous monitoring of pH for various biotechnological and/or medical processes.

Fig. 1

EP 4 170 334 A1

## Description

## Technical field

The presented invention is related to electrodes, test electrodes, half-cells and, in particular, related to pH sensitive, e.g. quinhydrone, antimony and hydrogen electrodes (ion selective glass electrodes).

## Background of the invention

The continuous monitoring of hydrogen ion concentration in a solution (pH) is an important parameter for various biotechnological processes (e.g., bioreactors), environmental monitoring for pH changes in wastewater and even for clinical diagnostics and healthcare, e.g., continuous pH monitoring of blood acidity. Typically, for the measurements of pH, electrodes are constructed based on hydrogen ion sensitive glass bulb working electrodes joined together with internal reference electrode. Internal reference electrode is usually made from Ag wire covered with AgCl salt in a contact with electrolyte, usually NaCl or KCl solution, separated from the solution of interest. Additionally, other reference electrodes such as calomel are also used with the same design and principle of operation as Ag/AgCl. This type of pH sensor was invented as early as in 1960 (see: US3095535A). For application purposes they are highly sensitive and accurate, however, both electrodes of the pH sensor have unresolved challenges: hydrogen ion selective membranes can also be influenced under certain conditions, e.g., high concentrations of sodium ions, while the potential of the internal reference electrode drifts over time resulting in a change in reduction/oxidation currents and in a reduction of measurement accuracy. The main reason for this potential drift in the design specifics of Ag/AgCl reference electrode, which results in leakage of internal NaCl and/or KCl electrolyte to the sample. Various inventions were reported to overcome the above-mentioned issues. For example, replacement of typical internal reference electrode was achieved using redox couples with large exchange currents such as iodide/triiodide (see: US4495050A), other inventions reported usage of different redox active compounds for the reference and even pH sensitive electrodes, e.g., n-butyl-ferrocene (see: US8877037B2). Additionally, it was reported that metal and/or metal oxide surfaces could be used to monitor the pH, e.g., palladium electrode was designed as a sensor electrode for the monitoring of pH (see: US20160202202A1). A related prior art invention was recently reported in a non-patent literature (Biosensors and Bioelectronics 2020, 164, 112338), though similar in design, it was used for measurement for glucose in the specific media and not pH.

All the above-mentioned inventions have drawbacks. Typically, metal and/or metal oxide pH sensor electrodes are very sensitive to surface contamination, i.e., when those electrodes are applied in complex media (such as bioreactors, wastewater or blood) various interfering compounds adsorb on the surface and affects the sensor signal. Inventions which uses redox active compounds to replace standard reference electrode (silver/silver chloride and/or calomel) typically suffer from the leakage of the redox active compound to the solution, which in turn may cause significant potential drifts of those type of reference electrode. Moreover, typical pH sensitive glass electrodes are fragile and cannot be used in environments where the risk of physical damage is present. Thus, the above-mentioned fact demonstrate that challenges related to the continuous monitoring pH sensors are still unresolved.

## Summary of the invention

The presented invention is a fully enzymatic small-scale pH sensor which could be applied for the continuous measurement/monitoring of pH in biotechnological processes as well as medical procedures. Such design of the invented pH sensor allows to use the sensor in various biotechnological/medical processes without significant customization or optimization. We demonstrate a pH sensor which is based on two electrodes: working sensor electrode with oxygen reducing enzyme in contact with analyzed solution (a buffer solution, bioreactor and/or cultivator solution, enzymatic conversion bioreactor solution, rain water, blood, serum, urine or solution of dialysate after hemodialysis) and reference electrode with oxygen reducing enzyme in contact with reference buffer solution (pH 7.0) separated from the solution of interest by the gel-like membrane. The potential difference between those electrodes is measured using a voltmeter and relates to the pH of the analyzed solution. This invention solves significant problems of the inventions described in the prior art: a) the surface of both electrodes is covered by the oxygen reducing enzyme, thus the electrodes are highly resistant to surface contamination; b) the potential is affected by the enzymatic reaction on the surface, thus no electrolyte leakage from the electrode to the surface is present; c) the electrodes are made of graphite and plastic, thus they are not fragile and can be used in environments, where physical contact is expected.

## Brief description of figures

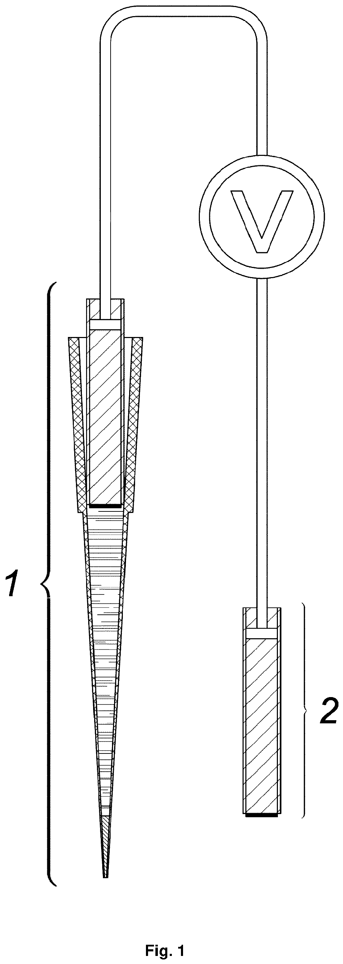

**Figure 1** shows schematic representation of the invention. pH sensor is composed of enzymatic reference electrode (1) and enzymatic sensor electrode (2) connected via potential measuring device.

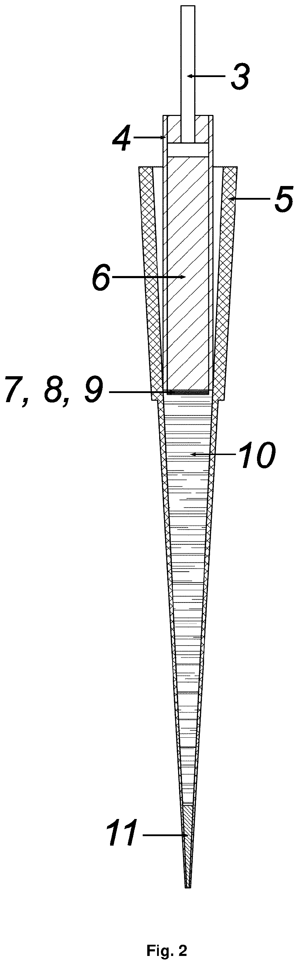

**Figure 2** shows fully assembled enzymatic reference electrode filled with solution (10) of known pH value. Copper wire contact (3) of reference electrode is connected with graphite rod (6) which is isolated by heat-shrinking tube (4). Planar side of (6) is nanostructured by carbon-based nanomaterials and/or metallic nanoparticles (7). The enzyme of oxidoreductases class (EC 1) (8) is immobilized on the surface (7) following by the formation Nafion® membrane (9). The electrode is fitted in to microtip-shaped tube (5) with the gel-like membrane (11).

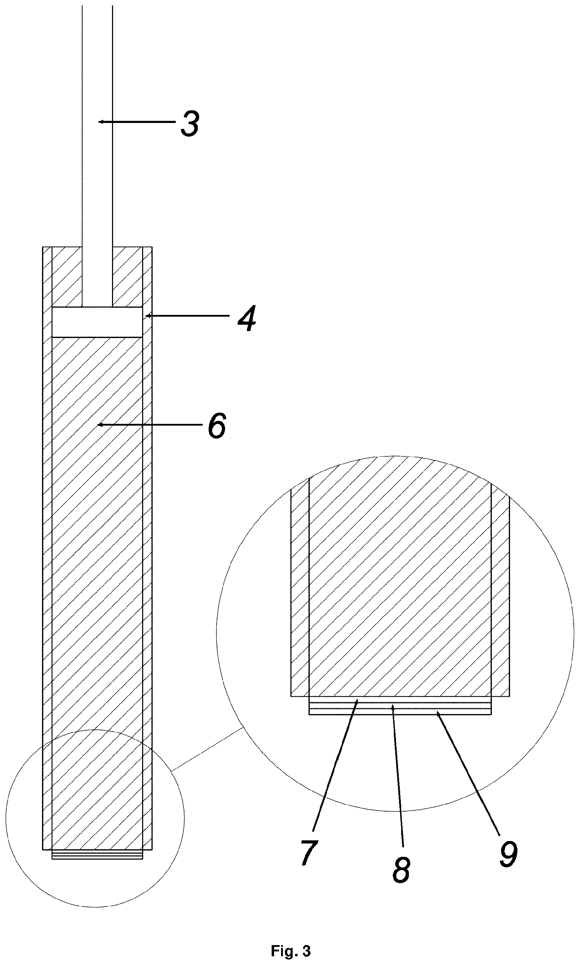

**Figure 3** represents schematic assembly of enzymatic sensor electrode. Copper wire contact (3) of sensor electrode is connected with graphite rod (6) which is isolated by heat-shrinking tube (4). Planar side of (6) is nanostructured by carbon-based nanomaterial and/or metallic nanoparticles (7). Then the enzyme of oxidoreductases class (EC 1) (8) is immobilized on the surface (7) following by the formation Nafion® membrane (9)

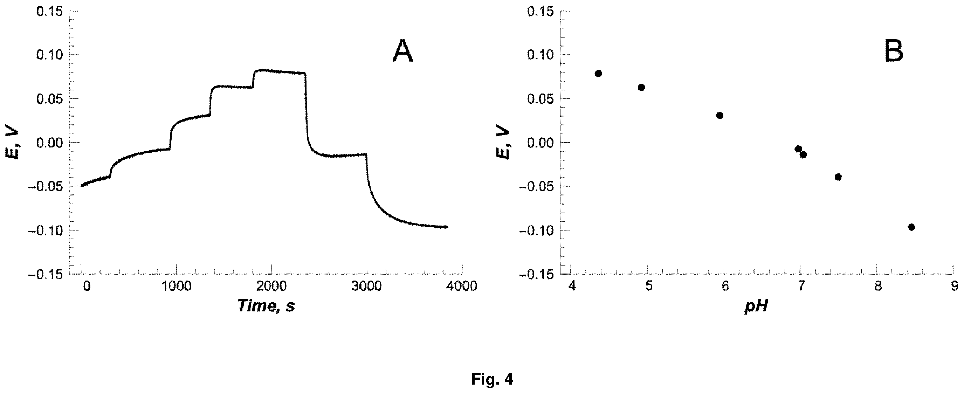

**Figure 4** in parts A and B shows calibration of the pH sensor. In part (A) a potential change in time is given with the respect to the change in pH value of the solution of interest. In part (B) potential dependence on pH of solution of interest is presented.

**Detailed description of the invention**

The presented invention is a pH sensor comprising of (a) *an enzymatic reference electrode* fitted into a microtip shaped tube and filled with electrolyte solution of known pH which is separated from measured media (solution of interest) with polymeric membrane and (b) *enzymatic working electrode* on the outer side of microtip shaped tube. The scheme of the invention in presented in Fig. 1. The pH measurement is carried out in this invention by measuring potential difference between those two electrodes using an electrochemical potential measuring device (e.g., voltmeter, multimeter, galvanostat, potentiostat or similar). The potential difference correlates to the pH of the measurement media (solution of interest).

*Description of enzymatic reference electrode*

In our proposed design, the enzymatic reference electrode is not sensitive to the changes of the media of interest (solution in which electrodes are placed) and its potential is constant during extended periods of time. An enzymatic reference electrode is composed of graphite electrode with nanostructured surface formed using carbon nanomaterials to increase the active surface area of the electrode. Afterwards, the oxygen reducing enzyme is immobilized by physical adsorption and/or covalent immobilization following by polymeric membrane coating (e.g. Nafion®, crosslinked proteins, nitrocellulose, polyethersulfone, glass fiber, lipid membrane or nylon). The designed reference electrode is fitted into a microtip shaped tube filled with electrolyte solution of known and constant pH value. At the one end of the tube, polymeric high ohmic resistance gel-like membrane made to prevent electrolyte solution leakage and the mixing of measuring media with the reference solution. However, this membrane can be polarized/depolarized, thus is allows charge transfer from/to reference electrode to/from media. At the opposite side of microtip shaped tube the reference electrode is fitted to copper contact.

In detail, enzymatic reference electrode was prepared as described below. At first, the planar side of graphite rod was polished using 200 $\mu$m grid emery paper and thoroughly rinsed with deionized water. Then the excess of heat shrinking tube were removed with blade to form flat surface and one more time thoroughly rinsed using deionized water. The planar side of the electrode were dried using pure argon. Then the suspension of carbon nanotubes in water where placed on the planar side of the electrode to fully cover the surface of visually seen graphite ant left to dry at room temperature. Then the enzyme was immobilized by placing 2.5 $\mu$l of enzyme solution and left for 2 hours in humified atmosphere at +4 $\underline{o}$C to dry. After that, 10 $\mu$l of neutralized Nafion® solution was placed on the planar side of the electrode and for 15 minutes in humified atmosphere at +4 $\underline{o}$C to dry. Then the electrode was immersed in buffer solution and stored in +4 $\underline{o}$C for at least 12 hours. Finally, electrode was placed in to microtip shaped tube with the polymeric membrane at the end and filled with buffer solution of known pH value and sealed.

The proposed design can work with various modifications. The electrode can be of carbon-material (e.g., graphite, glassy-carbon, etc.) or metal (e.g., gold, platinum, copper, iron, steel etc.). The nanomaterials may be used to increase the active surface or may not be used, the usage of nanomaterials increase the response of the electrode and its effectiveness. The nanomaterials used in the active surface of the electrode can be of carbon origin (e.g., carbon nanotubes, carbon nanospheres, carbon-paste nanoparticles, graphite particles, graphene nanosheets etc.), metal origin (e.g., metallic nanoparticles, metallic nanorods, metallic nanocavities, metallic quantum dots, etc.), conjugated organic polymer origin (e.g., conjugated organic polymer nanoparticles, etc.). The enzyme used for the reference electrode can any type of enzyme with a catalytic reaction having a defined, well-known and stable electrochemical potential. Those types of enzymes belong to oxidoreductase class and, typically, are multicopper oxidases (such as but not limited to laccase, bilirubin oxidase and ceruloplasmin, tyrosinase). However, this system is not limited to multicopper oxidase and other type of enzymes may be used, e.g., ferredoxin, NAD(P)+ reductase, hydrogen dependent $CO_2$ reductase. The semi permeable membrane isolating electrode from the solution can be designed using various gels or structures impeding the movement of ions and/or small molecules between inner electrode chamber and the solution of interest (solution where measurements takes place). The semi permeable membrane maybe composed of, but not limited to, agarose gel, polyacrylamide gel, multiple layers of dialysis membrane, porous glass membrane, ion-selective glass membrane, nitrocellulose, polyethersulfone, glass fiber, lipids, nylon.

*Description of enzymatic working electrode*

An enzymatic working electrode is formed directly on outer side of the microtip shaped tube by forming polymeric coating of outer wall followed by electrically conductive coating using carbon and/or metal-based nanomaterial. On the surface of electrically conductive coating the immobilization of the same or similar oxygen-reducing enzyme as in the case of reference electrode is performed. The key requirement for the enzyme is that it can catalyze the electrochemical reaction with a known and well-defined electrochemical potential, which is influenced by the change in pH according to Nernst equation. In the design of working enzymatic electrode, we have used a bilirubin oxidase, which catalyzes the oxygen reduction reaction (ORR):

$$O_2 + 4H^+ + 4e^- \rightarrow 2H_2O \qquad (1)$$

The ORR (reaction 1) electrochemical potential is dependent on pH, since hydrogen ions are being consumed during this reaction. The potential dependence can be written using Nernst equation:

$$E = E^0 - \frac{RT}{nF} Ln(\frac{1}{[H^+]^4}) \qquad (2)$$

Here, E - electrochemical potential of working electrode (V), E° - standard electrochemical potential for ORR (reaction 1) (V), T - temperature (K), R - gas constant (8.3145 J K$^{-1}$ mol$^{-1}$), n - electron number participating in a reaction (4 electrons), F - Faraday constant (96485 C mol$^{-1}$), [H$^+$] - hydrogen ion concentration in a solution of interest (measurement media) (mol L$^{-1}$). In case temperature during the measurement is kept standard (T=298K, 25°C), the reaction (2) can be simplified to:

$$E = E^0 - 59\,mV \times pH \qquad (3)$$

According to the equation (3) the change in pH by one unit should change the potential of the electrode by close to 59 mV. After the enzyme immobilization, additional membrane was added forming a layer of a polymeric membrane such as Nafion®.

In detail, enzymatic working electrode was prepared as described below. At first, the planar side of graphite rod was polished using 200 $\mu$m grid emery paper and thoroughly rinsed with deionized water. Then the excess of heat shrinking tube was removed with blade to form flat surface and one more time thoroughly rinsed using deionized water. The planar side of the electrode was dried using pure argon. Then the suspension of carbon nanotubes in water was placed on the planar side of the electrode to fully cover the surface of visually seen graphite ant left to dry at room temperature. Then the enzyme was immobilized by placing 2.5 $\mu$l of enzyme solution and left for 2 hours in humified atmosphere at 4 $\underline{o}$C to dry. After that, 10 $\mu$l of neutralized Nafion® solution was placed on the planar side of the electrode and for 15 minutes in humified atmosphere at 4 $\underline{o}$C to dry. Then the electrode was immersed in buffer solution and stored in 4 $\underline{o}$C for at least 12 hours.

The proposed design of enzymatic working electrode can include various modifications. The electrode can be of carbon-material (e.g., graphite, glassy-carbon, etc.) or metal (e.g., gold, platinum, copper, iron, steel etc.). The nanomaterials may be used to increase the active surface or may not be used, the usage of nanomaterials increase the response of the electrode and its effectiveness. The nanomaterials used in the active surface of the electrode can be of carbon origin (e.g., carbon nanotubes, carbon nanospheres, carbon-paste nanoparticles, graphite particles, graphene nanosheets etc.), metal origin (e.g., metallic nanoparticles, metallic nanorods, metallic nanocavities, etc.). The enzyme used for the working electrode can any type of enzyme with a catalytic reaction having a defined, well-known and stable electrochemical potential, which is influenced by the change of pH according to Nernst equation. For example, the usage of other type of enzymes may give similar results, e.g., ferredoxin, NAD(P)+ reductase, hydrogen dependent $CO_2$ reductase.

*Example 1*

For example, this sensor can be readily applied for the monitoring of pH in a buffer solution of interest (Fig. 4). Here, we present an example of pH sensor measurement in model buffer solution. At first, the potential difference between two electrodes composing enzymatic pH sensor is 0.0 mV at pH 7.000. When the potential is negative - pH is higher than 7.000; when the potential is positive - pH is lower than 7.000. For the continuous measurement of pH, the pH sensor was placed in solution with pH value of 7.5. The pH sensor showed a negative potential of -40 mV. Afterwards the pH of the electrode was changed to (1) 6.98 (potential was -5 mV), (2) 5.95 (potential was 30 mV), (3) 4.92 (potential was 62 mV), (4) 4.36 (potential was 82 mV), (5) 7.04 (potential was -6 mV), (6) 8.46 (potential was -101 mV) (Fig. 4 A). The pH value was plotted against the potential showing a good correlation (Fig. 4 B).

*Example 2*

For example, this sensor can be readily applied for the monitoring of pH during yeast fermentation when pH of the process is close to 7.0. The reference electrolyte solution inside the microtip shaped tube of the enzymatic reference electrode is also set to pH 7.0, thus at the beginning of the process the potential difference is zero. The increase or decrease in pH of fermentation media results in the change of electrochemical potential difference between enzymatic reference and enzymatic sensor electrodes.

*Example 3*

For example, this sensor can be used to verify if hemodialysis is in progress by monitoring of pH of dialysate. The microtip shaped tube of the enzymatic reference electrode is filled with the same solution as dialysis is performed and the potential difference between two electrodes composing enzymatic pH sensor is 0.0 mV. The change of potential difference in to negative or positive value indicates the change of pH of dialysis solution to alkaline or acidic side, respectively. Any change of potential difference after the hemodialysis start confirms it running.

*Example 4*

For example, this sensor can be integrated in to dialysis system to monitor pH of dialysate. It is known that pH below 6.5 or above 7.5 is unsafe. If the pH of dialysis solution before hemodialysis is 7.0, then the reference electrolyte solution inside the microtip shaped tube of the enzymatic reference electrode is also set to pH 7.0, thus at the beginning of the process the potential difference is 0 mV. The change of potential difference to 18 mV or to - 35 mV indicates that the pH of dialysate is below 6.5 or above 7.5, respectively and the quality of dialysate is poor as well as dialysate is unsafe to use.

References:

1. Ramašauskas L, Meškys R, Ratautas D. Real-time glucose monitoring system containing enzymatic sensor and enzymatic reference electrodes. Biosens Bioelectron. 2020 Sep 15;164:112338. doi: 10.1016/j.bios.2020.112338

2. US3095535A

3. US4495050A

4. US8877037B2

5. US20160202202A1

**Claims**

1. A pH sensor comprising of enzymatic reference electrode and enzymatic working electrode, wherein:

   (a) an enzymatic reference electrode is fitted into a microtip shaped tube and filled with electrolyte solution of known pH which is separated from solution of interest with a membrane,
   (b) an enzymatic working electrode is composed of the electrode with immobilized pH-sensitive enzyme.

2. The pH sensor according to claim 1, wherein a base material is inserted in an isolating tube, where one end of the base material is sealed and in contact with electroconductive housing while the other end of the base material is in contact with the solution.

3. The pH sensor according to claim 1, wherein the electrodes' rod base material is selected from carbon, copper, iron, steel, silver, platinum or gold.

4. The pH sensor according to claim 1, wherein the electrodes comprise a nanomaterial layer composed of carbon nanotubes, carbon nanospheres, graphite particles, graphene nanosheets, metal nanostructures or conjugated organic polymer nanostructures.

5. The pH sensor according to claim 1, wherein the immobilized enzyme is any sort of oxidoreductase, such as ferredoxin, NAD(P)$^+$ reductase or hydrogen dependent $CO_2$ reductase.

6. The pH sensor according to claim 1, wherein the sensor is covered with any sort of a polymeric membrane, such as Nafion®, crosslinked proteins, nitrocellulose, polyethersulfone, glass fiber, lipid membrane or nylon.

7. The pH sensor according to claim 1, wherein the enzymatic reference electrode is separated from the media of interest with the gel-like polymeric membrane, such as agarose gel, crosslinked proteins, nitrocellulose, polyethersulfone, glass fiber, lipids, nylon or porous-glass.

8. The pH sensor according to claims 1-7 for use in buffer solutions, bioreactors and/or cultivators, enzymatic conversion bioreactors, rain water pH monitoring, monitoring of pH of fluids with clinical significance - blood, serum, urine or solution of dialysate after hemodialysis.

Fig. 1

Fig. 2

**3**

**4**

**6**

**7**

**8**

**9**

Fig. 3

Fig. 4

EP 4 170 334 A1

**EP 4 170 334 A1**

Europäisches Patentamt
European Patent Office
Office européen des brevets

# EUROPEAN SEARCH REPORT

Application Number

**EP 21 20 3942**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAMASAUSKAS LUKAS ET AL: "Real-time glucose monitoring system containing enzymatic sensor and enzymatic reference electrodes", BIOSENSORS AND BIOELECTRONICS, ELSEVIER SCIENCE LTD, UK, AMSTERDAM , NL, vol. 164, 30 May 2020 (2020-05-30), XP086188779, ISSN: 0956-5663, DOI: 10.1016/J.BIOS.2020.112338 [retrieved on 2020-05-30] * figures 1-5 * * page 1 - page 6 * ----- | 1-8 | INV. G01N27/30 G01N27/416 |
| A | Martín-Yerga Daniel ET AL: "S-1 SUPPORTING INFORMATION Electrochemical study and applications of the selective electrodeposition of silver on quantum dots", , 24 February 2016 (2016-02-24), XP055905103, Retrieved from the Internet: URL:https://pubs.acs.org/doi/10.1021/acs.analchem.5b04568 [retrieved on 2022-03-24] * pages S-2 * ----- | 1-8 | |
| A | US 2019/339220 A1 (MACPHERSON JULIE VICTORIA [GB] ET AL) 7 November 2019 (2019-11-07) * paragraph [0044] - paragraph [0045] * ----- | 1-8 | TECHNICAL FIELDS SEARCHED (IPC) G01N |

The present search report has been drawn up for all claims

| Place of search | Date of completion of the search | Examiner |
|---|---|---|
| Munich | 25 March 2022 | Colasanti, Katharina |

EPO FORM 1503 03.82 (P04C01)

## ANNEX TO THE EUROPEAN SEARCH REPORT
## ON EUROPEAN PATENT APPLICATION NO.

EP 21 20 3942

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2022

| Patent document cited in search report | | Publication date | Patent family member(s) | | Publication date |
|---|---|---|---|---|---|
| US 2019339220 A1 | | 07-11-2019 | EP | 3577448 A1 | 11-12-2019 |
| | | | GB | 2560251 A | 05-09-2018 |
| | | | JP | 6818898 B2 | 27-01-2021 |
| | | | JP | 2020514727 A | 21-05-2020 |
| | | | US | 2019339220 A1 | 07-11-2019 |
| | | | WO | 2018141738 A1 | 09-08-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3095535 A
- US 4495050 A
- US 8877037 B2
- US 20160202202 A1

**Non-patent literature cited in the description**

- *Biosensors and Bioelectronics,* 2020, vol. 164, 112338
- **RAMAŠAUSKAS L ; MEŠKYS R ; RATAUTAS D.** Real-time glucose monitoring system containing enzymatic sensor and enzymatic reference electrodes. *Biosens Bioelectron,* 15 September 2020, vol. 164, 112338